# EUROPEAN PATENT APPLICATION

(11) **EP 2 110 818 A1**
(43) Date of publication of application: **21.10.2009**
(21) Application number: 09004395.1
(22) Date of filing: 20.09.2006
(51) Int. Cl.: G11B 27/031, G11B 27/34, G11B 27/32, G06F 3/048, G06F 17/30

(54) **Methods and apparatus for creation, distribution and presentation of polymorphic media**

(62) Divisional of application: 06794553.5
(71) Applicant: John W Hannay & Company Limited, East Kilbride G74 5NE (GB)
(72) Inventor: Ingrosso, Claudio, Fife KY11 8ES (GB); Abram, David Anthony Shaw, Glasgow G76 9BE (GB)
(74) Representative: Palmer, Jonathan R.

(57) **Abstract**

An editing apparatus for multimedia content including video data segments, the apparatus have having a user interface providing a matrix structure of at least two dimensions, in which one or more segments can be assigned to a given location in the matrix.

## Description

The invention relates to the creation and presentation of recorded information, particularly motion pictures, in polymorphic form, meaning that the content and sequence of presentation varies from occasion to occasion.

The inventors are particularly interested in production of motion pictures ('movies') which traditionally follow a linear format Whether issued on polyester film reels or on a digital medium such as the popular DVD, the selection of scenes and the sequence in which they are presented is determined initially at the scripting stage but finally and irrevocably in the editing stage, before printing or recording the content on the medium on which it is delivered.

The inventors have seen potential in a new form of recording, particularly for audiovisual programmes, in which the order of presentation and/or the selection of scenes to include varies, either radically or subtly, from viewing to viewing. Precursors of this idea are known in modern cinema, for example in such films as *Timecode* and *Memento.* In *Memento* we saw the brilliant exploitation of 'broken timeline' techniques. With each scene we are asked to keep a mental record of where we are with the story and let our brains do the reassembling of the scenes into a linear story, meanwhile we are kept guessing for the outcome. Only one timeline is presented, although the producers have subsequently provided on DVD a linear timeline version for comparison with the original.

*Timecode* aptly demonstrates how the same story can be perceived differently and yet be told at the same time by the clever use of 4 simultaneous cameras. It is reported that a music score sheet was used for the script.

In practice, however, these "polymorphic" presentations are no more than alternative cuts determined, as before, in the editing suite at the time the recording is created. The number of permutations is minimal, and each is completely determined in advance by the individual author.

Paul Hudak has provided "An Algebraic Theory of Polymorphic Temporal Media", Research Report RR-1259, Department of Computer Science, Yale University, New Haven, CT 06520-8285, USA (downloaded from Internet). That paper is purely theoretical, however, and no practical implementations applications are discussed.

The inventors have identified High Definition digital cinematography and the Digital Versatile Disc (DVD) platform as suitable technologies upon which to base a realisation of truly polymorphic media. It is assumed in the following description that the reader is familiar with digital movie editing systems, and the DVD system. The DVD system is described for example in *An Introduction to DVD formats* by Graham Sharpless (available from Deluxe Global Media Services Ltd. at http://www.disctronics.co.uk/downloads) and in *The Unofficial DVD Specification,* available on the internet from www.dvd-replica.com. Official specifications are available to DVD licensees. Other digital audiovisual formats, including downloads to portable media players such as mobile phones, MP3/MP4 players, are becoming widespread, as well as HD-DVD/Blu-Ray™ formats. DVD will be mentioned below only as a representative example of these possibilities.

Patent application US20030194211 of Abecassis describes the various possible techniques in the creation and playback of digital recordings and broadcasts, for example to show more or less detail of some topic in an educational training video recording, according to user choice, or to show a programme with different levels of swearing and violence and even a different mix of character development versus action, according to user-selected parameters. It is also known that DVDs and digital TV broadcasts can include alternative camera angles and soundtracks, selectable by the user at the outset or as the action proceeds. None of these steps has the intention or effect of disturbing what is an essentially fixed linear sequence of scenes. All the steps are controlled by the user, and selected from among a very restricted set of possibilities.

Rich file formats exist to preserve edit histories and other 'metadata' along with the essential A/V content. Some of these are proprietary to different manufacturers of editing application software and hardware. There is also the open source AAF (advanced audio file) format, promoted by the AAF Association (www.aafassociation.org). Although AAF files are designed to store such metadata in a formed which can be preserved, modified and shared between disparate applications throughout post-production, the assumption is still that the file will be 'flattened' into a linear format before distribution.

In a first aspect, the invention provides an apparatus for polymorphic presentation of pre-recorded audiovisual content, particularly motion picture content, the recorded content comprising a plurality of individual segments, the apparatus comprising sequencing means for defining a presentation sequence of a subset of the segments and for causing the segments to be presented in accordance with the defined presentation sequence, wherein:
- said sequencing means uses randomisation to define at least part of the presentation sequence,
- each segment involved in the randomised part of the sequence has associated with it at least one rule of compatibility with other segments, and
- the sequencing means is operable to generate said randomised part of the sequence by selecting and adding segments to a sequence already partly defined, using (i) randomised values and (ii) predetermined rules specifying compatibility between the segments already included in the sequence and segments which are candidates for adding to the sequence.

The sequencing means may be operable to select only a subset of the recorded segments to include in the presentation sequence.

The sequencing means may be operable to vary the relative order of segments in the presentation sequence in accordance with randomised value

The sequencing means may be responsive to an OUT rule for a segment, the OUT rule restricting which other segments can immediately follow the segment.

The sequencing means may be responsive to an IN rule for a segment, the IN rule restricting which other segments the segment can immediately precede.

The sequencing means may be responsive to rules defining a group of segments nominally occupying the same position on a first axis, the sequencing means selecting the group according to a first randomised value, and then selecting a particular member of the group according to a second value. These rules allow the author to organise scenes in a 'two-dimensional' structure. The first randomised value selects the sequence of scenes in a first, 'X' axis, corresponding to presentation timeline, while the second value allows variations of a particular scene to be selected from different positions on a second, 'Y' axis, orthogonal to the timeline. Third and further axes can be provided according to the wishes of the system designer.

The second value may be a randomised value or a user-determined parameter. The different versions of the scene on the Y axis may differ in character (level of drama, violence or comedy, for example).

The sequencing means may be responsive to a rule for a segment restricting which other segments can appear at any point after the segment. For example if a character dies in a particular scene, the rule could exclude all candidate segments in which the same character appears alive.

The sequencing means may be responsive to a rule for a segment restricting which other segments can appear in the same presentation sequence.

The sequencing means may be operable to build presentation sequences in a forward order and/or in reverse order. The building order may be selected based on information stored with the pre-recorded content, for example on DVD. Other strategies for building the presentation sequence can equally be envisaged, for example selecting certain key segments first and then working forwards and backwards from each key segment to complete the presentation sequence.

The sequencing means may be operable to apply fuzzy rules, the outcome of such rules depending on a comparison between the relative strengths of contradictory rules, or on a comparison of a rule strength and a randomised values. For example, IN rules or OUT rules as mentioned above may be defined to provide "weak" or "strong" bonding between two segments.

The sequencing means may be responsive to further attributes stored in relation to certain segments.

A segment may have an attribute of dominance, permitting a rule to be broken according to a strength of the rule.

The sequencing means may be operable to re-use a previously-generated randomised value in subsequent decisions between candidate segments. For example, the author may wish to structure the movie according to a value generated randomly at the time of playback, but have it influence scene selection in a consistent way at different points in the presentation sequence.

The sequencing means may be operable such that one or more of the included segments is itself defined by a presentation of sub-segments assembled at the time of playback. In other words, rather than just assembling complete scenes together in a polymorphic way, the sequencing means may be configured to select and manipulate individual shots within scenes, so that the scenes themselves vary between viewings. This increases the range of polymorphism permitted, while maintaining a manageable structure. All references to 'segment' above and below should be interpreted as including references to such sub-segments, unless the context requires otherwise.

The sequencing means may be responsive to a rule associated with a segment (or sub-segment) permitting transition to or from the segment at a number of alternative points, selecting the point of transition in the presentation sequence in accordance with a randomised value.

Such a rule may define a 'sliding cut' between two segments, such that a segment is terminated early or late depending on a randomised value, the sliding cut thus having an effect on the total length of the presentation sequence.

Such a rule may alternatively define a 'variable cut' between two segments, in which the point of transition is varied in accordance with the randomised value, without altering the overall duration. This transition may for example occur between two shots in the video presentation, while a common audio track continues under both shots.

The sequencing means may be operable to retrieve said rules from special metadata fields within an Advanced Authoring Format (AAF) file which also defines the corresponding audiovisual content. AAF is a rich file format defined to carry metadata detailing the history of a segment of audiovisual content, in order that editing and processing decisions can be retained alongside the finished product. Adopting the AAF file format allows compatibility with mainstream content creation and production systems, while also providing a platform or the addition of metadata specific to a polymorphic presentation environment.

The invention further provides a recording medium wherein audiovisual content and a rules database are stored for use in an apparatus according to the first aspect of the invention as set forth above. The content and rules may be stored in one or more AAF files, the rules database being stored as metadata within the AAF format. The audiovisual content may be stored within the AAF file itself, or in separate files referenced by the AAF file(s). Conversely, the rules database could be stored in external files, which may be more convenient if the presentation sequence is being assembled in a broadcasting environment.

The invention in other aspects encompasses scripting and authoring tools useful in the production of such recordings.

The invention in a second aspect provides an apparatus for polymorphic presentation of pre-recorded audiovisual content, particularly motion picture content, the recorded content comprising a plurality of individual segments stored on a recording medium, the apparatus comprising sequencing means for defining a presentation sequence of at least a subset of the segments and for causing the segments to be presented in accordance with the defined presentation sequence, whereby segments of recorded content can be used and re-used in numerous different presentation sequences substantially without replicating the content on the recording medium. This avoids the need to duplicate recorded content, while storing effectively several different versions of a movie on the single medium.

The sequences may be pre-defined and stored on the storage medium, and/or they may be generated by a randomisation process in accordance with the first aspect of the invention.
The storage medium may be a pre-recorded medium like a DVD, or a rewritable storage device such as a hard disk drive or solid state memory drive, either built into the apparatus or removable.

Alternatively or in addition, the sequences may be defined by sequence definitions received over a telecommunication channel. This option permits producers effectively to multiply the content they are providing, without the need to deliver the bulky data of the content segments either on storage device or by download. Users can be given access to new versions of material.

The invention in a third aspect provides an apparatus for polymorphic presentation of pre-recorded audiovisual content, particularly motion picture content, the recorded content comprising a plurality of individual segments received over a telecommunication channel stored locally in the apparatus, the apparatus comprising sequencing means for defining a presentation sequence of at least a subset of the segments and for causing the segments to be presented in accordance with the defined presentation sequence, whereby segments of content stored locally can be used and re-used In numerous different presentation sequences substantially without re-downloading them via said channel. This reduces channel bandwidth and cost, as well as occupation of local storage, while permitting the user to purchase several different versions of a movie on the single medium.

The apparatus may be configured to download a prepared definition of the presentation sequence.

Alternatively or in addition, the apparatus may include means for downloading a database of rules associated with the downloaded content segments, and for generating new sequence definitions by a randomisation process, in accordance with the first aspect of the invention. The apparatus in that case may be configured to download new rules for presentation of the same content segments, without re-downloading the content segments themselves.

In either the second or third aspects of the invention, the apparatus may be operable to download additional segments of content from a remote server, where a new sequence definition requires content not already stored locally in the apparatus, without downloading all the referenced segments. This may be implemented by the server interrogating the apparatus to determine which segments are already stored when supplying the new sequence definition, or by the apparatus itself comparing segment references in the new sequence definition with the segments stored locally.

The invention in a fourth aspect provides an editing apparatus for organising multimedia content, particularly video data segments, the apparatus have having a user interface providing a matrix structure of at least two dimensions, in which one or more segments can be assigned to a given location in the matrix.

Segments may be assigned to a location in the matrix by a 'drag-and-drop' action using a pointing device and a display item representative of the content in a source location.

Each segment (e.g. a 'scene') may comprise an edit of plural sub-segments (e.g. different 'shots', sound elements etc.). The apparatus may be operable directly to open and make editing changes within the segment at a given matrix location, then close and hide the internal structure of the segment.

The matrix structure may have more than two dimensions, the user interface presenting selected two-dimensional views according to a pair of dimensions selected by the user. The user interface may provide controls for selecting the points in a third dimension be represented in said two-dimensional view.

The apparatus may be operable such that one of said dimensions represents a presentation time sequence. Alternatively, or in addition, the apparatus may be operable to display selected segments in a presentation sequence separate from the matrix, and to permit segments from the array to be selected and placed at a desired location in the presentation sequence.

The editing apparatus may include means for automatically generating presentation sequence definitions using a succession of co-ordinate sets to reference, in a presentation order, selected segments by their locations in the matrix. The sequence generating means may be operable to restrict the permutations of segments included in a sequence definition, by reference to compatibility rules associated with one or more matrix locations. The sequence generating means may be operable to influence the selection of segments to be included in the sequence definition, by reference to preference values indicated by the operator. The sequence generator may be responsive to preference expressed in terms of one of said matrix dimensions. The sequence generator may include a randomiser for use in determining a selection, taking account of any such restrictions and/or preference values expressed.

The apparatus may include means for reproducing the selected segments in the presentation order as a continuous presentation, for immediate viewing or in a recorded format.

The apparatus may include means for storing a plurality of alternative sequence definitions on a storage medium, together with content for at least the set of segments necessary to reproduce at a later time the segments referenced in a selected one of said sequence definitions.

The matrix structure may be defined by metadata in one or more AAF format files. Each segment may comprise an AAF file in itself. Data for plural segments may be contained within one AAF file.

The invention in a fifth aspect provides an apparatus for organising multimedia content during creation, particularly video data segments, the apparatus have having a user interface providing a matrix structure of at least two dimensions and having a communication interface to video recording apparatus, whereby a segment can be assigned to a given location in the matrix immediately at the time of recording.

The apparatus may be operable such that an operator selects a matrix location using a pointing device prior to initiating capture of a segment of video recording. The apparatus may permit a plurality of takes to be associated with a given matrix location. This may be a dedicated feature at each matrix location, or one dimension of the matrix might be used to identify plural takes. The apparatus may be operable to present the takes for selection of a preferred take at each matrix location. The apparatus may be operable to retain references to the other takes, for future access.

The user interface may be presented so as to highlight automatically matrix locations for which content is still to be captured.

The matrix structure may have more than two dimensions, the user interface presenting selected two-dimensional views according to a pair of dimensions selected by the user. The user interface may provide controls for selecting the points in a third dimension be represented in said two-dimensional view.

Each segment (e.g. a 'scene') may comprise an edit of plural sub-segments (e.g. different 'shots', sound elements etc.). The apparatus may be operable directly to open and make editing changes within the segment at a given matrix location, then close and hide the internal structure of the segment.

The apparatus may be operable to store compatibility rules between segments associated with specific matrix locations prior to capture of the content forming those segments, said rules being suitable to indicate permutations permitted to preferred in subsequent polymorphic presentation of the segments. The apparatus may provide for editing of said rules before and after capture.

The invention provides methods of capturing, editing and distributing audiovisual content using the apparatus of the various aspects of the invention as set forth above.

While the above aspects of the invention are expressed in application to audiovisual content (video and audio content), the same principles are applicable to textual matter (literature). The invention therefore further includes aspects corresponding to each o the aspects set forth above and described in the examples below, but where the audiovisual content is replaced by written matter. Literary authors at many times have experimented with fractured chronology, and presentation of a story from the perspective of different protagonists. As with film productions, however, the invention permits such experiments to be retained and played out for the user in a seamless presentation, rather than the author having to select and enforce one choice from among the many alternative structures. The invention thus enables and encompasses polymorphic 'e-books', as well as polymorphic movies.

The invention in its various aspects can be implemented by dedicated hardware or a combination of software and hardware such as PC workstations (at the production side) and DVD player subsystems (at the consumer side). The invention is not limited to any particular one of these implementations, except where this is explicit in a particular claim.

### BRIEF DESCRIPTION OF THE DRAWINGS

Embodiments of the invention will now be described, by way of example only, by reference to the accompanying drawings, in which:
Figure 1 illustrates the structure of a segment of audiovisual material recorded as part of a Polymorphic Movie in accordance with the present invention;
Figure 2 shows a known Edit Decision List useful in understanding the present invention;
Figure 3 illustrates the principles of two-dimensional permutation of scenes or segments in a Polymorphic Movie;
Figure 4 shows an example script and presentation sequence;
Figure 5 shows a Wildcard segment added to the script of Figure 4;
Figure 6 shows schematically the architecture of a system for producing and playing Polymorphic Movies in one embodiment of the present invention;
Figure 7 is a flowchart showing operations performed by the player of Figure 6;
Figure 8 shows the set of another example polymorphic movie, *The Next Room*;
Figures 9 and 10 show example user interface screens for a matrix editor useful in the development of polymorphic movies, based on an example of a pop music promotional video;
Figures 11 (a), (b), (c) and (d) illustrate different mechanisms for delivery of polymorphic movies to different types of user apparatus, and with different payment models;
Figure 12 illustrates the structure of files in an AAF-compatible embodiment of the invention;
Figure 13 shows schematically the architecture of an AAF-compliant editing apparatus in the preferred embodiment; and
Figure 14 shows an example user interface screen for the editing apparatus of Figure 13;
Figures 15 and 16 show sliding cut and variable cut functions available in a preferred embodiment of the present invention; and
Figure 17 illustrates the principle of a semi-automated content capture tool an process, useful particularly but not exclusively in the production of polymorphic movies.

### DETAILED DESCRIPTION OF THE EMBODIMENTS

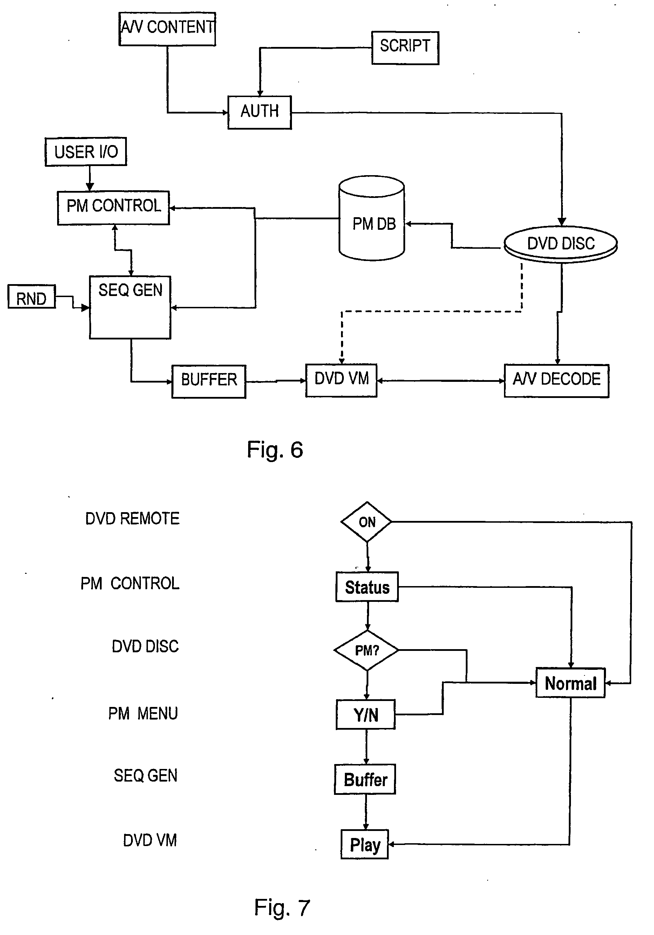

Segments have rules associated with them that are stored in a database. These rules may or may not be supplemented by a basic set of rules programmed into the player. The rules database can be stored as one entity, or it may be distributed so that rules are attached to and handled together with data defining the content of each segment. All the segments and rules are preferably stored together on the same recording medium such as a DVD, however, in order that the polymorphic movie can be distributed conveniently. (An example player architecture will be described later, with reference to Figures 6 and 7.)

An interesting starting point to consider the structure of the rules database for polymorphic presentation of these segments is a structure used in standard commercial software for editing digital movies. It's called Edit Decision List (EDL).

### Components of an EDL

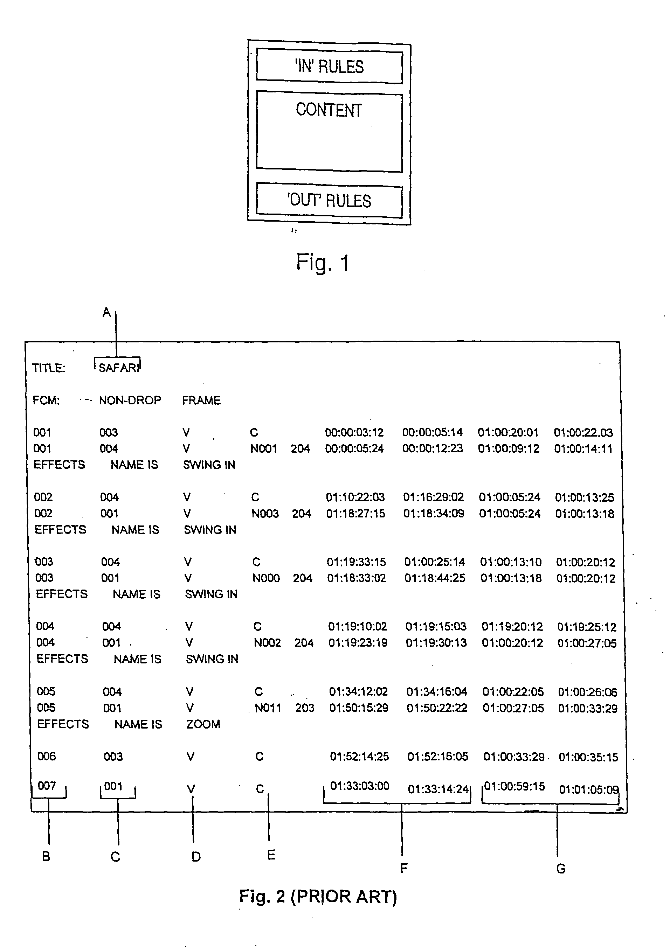

Figure 2 shows an example of an EDL from the editing product Adobe Premiere. While slight differences exist among different EDLs, most contain eight primary columns, two auxiliary columns, and the following information, labelled A, B etc. in the Figure, as follows:
**A = Header:** Names the list and the type of timecode in which the record was created (drop- frame or non-drop-frame).
**B = Event Number:** Identifies a single event or edit. Unnumbered lines accompanying events are called notes or comments.
**C = Source Reel ID:** Identifies the name or number of the videotape containing the clip.
**D = Edit Mode:** Indicates whether the edits take place on the video track only (V), the audio track only (A), or a combination of both (B).
**E = Transition Type:** Describes the type of edit: C represents a cut, W represents a wipe, K represents a key (superimposed), and D represents a dissolve.
**F = Source In and Source Out:** Lists the timecode of the first frame and the last frame of the clip as it appears on the source videotape.
**G = Program In and Program Out:** Lists the timecode at which the source clip is to be recorded on the master tape.

### [Descriptions extracted from Adobe Premiere^{™} Help file.]

In the conventional production process, the edit decision list is taken as instructions for a further module to concatenate the various scenes, with the prescribed transitions, sound track and so forth, to produce a finished presentation on tape, film or DVD. The edit decision list is thus a part of the production process, not a part of the finished product. In film, the product might be divided into smaller chunks so as to fit on a number of standard reels. In DVD, the producer can divide the presentation into chunks and define a number of entry points accessible via a scene menu. Generally, however, the sequence of presentation is very rigidly defined and fixed on the storage medium. Even in the AAF format (described in more detail below), where editing history is preserved in a file package to be accessible throughout the post-production process, the assumption is that such data will stripped out before product is released on DVD or other format In contrast, the present inventors propose to include in the DVD product the "raw materials" on the list together with an enhanced form of edit decision list (incorporating the rules database). Together with an enhanced player (or possibly enhanced programming on the disk itself), this allows polymorphic presentations whereby the recorded scenes can be selected, ordered and concatenated into a seamless presentation, all at the time of playback, rather than at the time of production. It is noted that many existing DVD releases include additional material such as alternative endings, 'deleted scenes' and so forth, but these are presented as separate items to be selected and viewed independently and out of context. This does not give the viewer a real opportunity to experience the complete presentation, seamlessly in its alternative form.

Even without each user having an enhanced player, the rules database may be held by a content provider and/or distributor, who uses it to generate the presentation sequence and broadcast, stream or download the finished presentation to an end user apparatus. The end user apparatus in that case might be a simple TV set or computer video player.

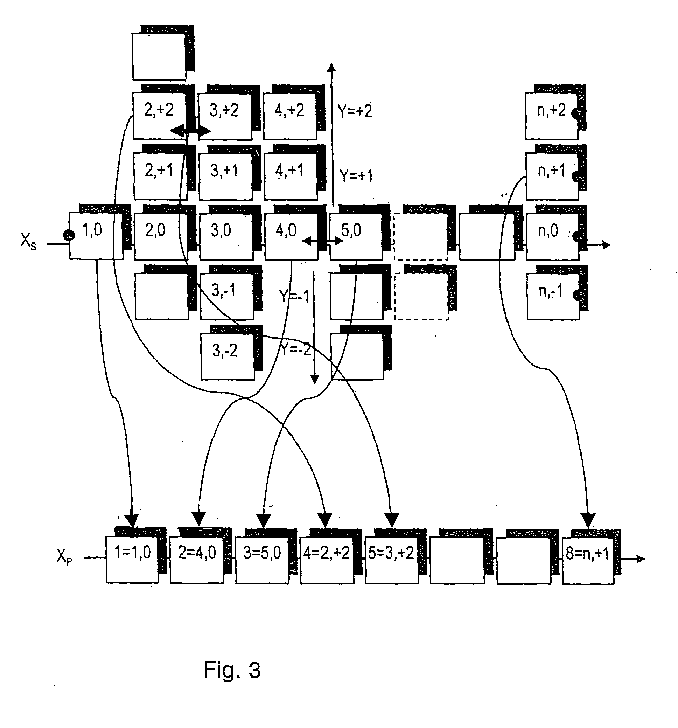

Referring to Figure 3, in the system proposed herein, the creation of a new type of Polymorphic Movie is illustrated by visualising the available segments as being arranged on two or more 'axes'.

In the illustration, the lower horizontal axis labelled XP (the presentation axis) corresponds effectively to the timeline of the final presentation: a segment is presented to the viewer immediately after the one to its left along the XP axis. The segments are for convenience shown all the same length but will not generally be so. In the desired presentation there are eight segments, just for the sake of example, numbered 1-8.

The curved arrows represent some steps in the process implemented by a sequencing device or process within the player, selecting the segments 1-8 from a pool of available segments (the source material) shown in a two-dimensional array in the upper part of the drawing. This two-dimensional arrangement is a useful structure for authoring polymorphic movies and imposing some constraints on the randomisation process at a fairly high level and in an intuitive manner, rather than explicitly defining every rule individually. Nevertheless, as a consequence of arranging the source segments in this way, rules are implicitly generated and stored with the source materials in a form of a database, which is the enhanced edit decision list. It is a matter of design choice, whether to store the resulting rules explicitly in a matrix format, or to leave the matrix structure as a convenient view for the author, not explicitly represented within the rules database itself. A description of the apparatus involved in the creation and playback of the polymorphic movie will be described later.

In the "script domain" shown in the upper part of the drawing, there is an axis XS, along which segments (scenes) available for inclusion in the presentation sequence are arrayed. Orthogonal to the XS axis, the script also arranges scenes (segments) on a Y axis. Each segment thus has an index X,Y, starting from 1,0 up to n,+2 in the illustration, by which it can be identified in the rules database, and through which it can be found on the storage medium when required for playback. The X axis can be viewed, if desired, as corresponding to order in the presentation sequence. However, ordering of the segments on the XS axis does not directly constrain their ordering on the presentation axis XP. To do this, a database rules is created during the production processes, whether in pre-production (for example scripting, storyboarding) or post-production (for example editing). Similarly, the position of a segment on the Y axis is represented in the rules database stored with the segments. Note that all positions in the X, Y array need not be filled.

As mentioned already, the rules provided for each segment will determine, whether its position in the presentation sequence XP is fixed, free subject to certain constraints, or completely free. Within these rules, a randomising process performed at playback time will determine exactly which segments are reproduced for the viewer, and in what sequence. The most basic type of rule describes the "bonding" between segments, which is analogous to the ability of atoms and molecules to bond with each other to form new molecules. For each segment there will typically be a rule listing or otherwise defining which other segments are permitted to follow immediately in the presentation sequence (OUT rules). There may also be IN rules specifying which other segments can precede the present one.

Some examples of the types of rules which can be coded in the database are illustrated graphically in the upper part of the drawing as follows:
- Using double-headed arrows it is indicated that segment 2,+2 can only be followed by segment 3,+2, and segment 3,+2 can only follow segment 2,+2 in the presentation sequence. Accordingly, once segment 2,+2 is selected for position 4 in the presentation sequence as shown, the sequence generator is forced by the rules to place segment 3,+2 at position 5.
- Similarly, segments 4,0 and 5,0 are bound together, but with a weaker connection (thinner arrow). This allows other mechanisms, to break the bond, as described further below.
- Using a solid dot at the IN side of segment 1,0 it is indicated as a rule that segment 1,0 must be the first segment in the presentation sequence.
- Similarly, solid dots at the OUT side of segments N,-1 to N,+2 indicate rules that each of these segments can only appear as the final segment in a presentation. The fact that there are four of these indicates that at least four alternative endings are possible for the same script, in the polymorphic presentation.

The drawing also shows how the content can also include variants of a given segment, visualised on one or more orthogonal axes, which can be selected according to a further randomised value. Segments can be grouped having the same X value, but different Y values ascribed to them (-2, -1, 0, +1, +2, for example). Then, once the group has been selected for inclusion in the presentation, a randomised value of Y is generated and used to select exactly which one of the segments should be included in the presentation sequence, at that point on the X axis/timeline. The same value of Y may be used at different points in the sequence, rather than being randomised at each use. In some dimensions, the value may simply be a user-determined parameter, it may function similarly to the "character" controls in the Abecassis proposal system mentioned above. Where it includes a random element, the variations in the content will produce results more challenging to the viewer, and the author. As a simple illustration of the potential for creative expression, we can imagine that an author might for example use increasingly positive and negative values of Y to represent increasingly positive and negative moods in the content. The feel of the scenes and ultimately the course of the plot can then be varied under control of this parameter Y.

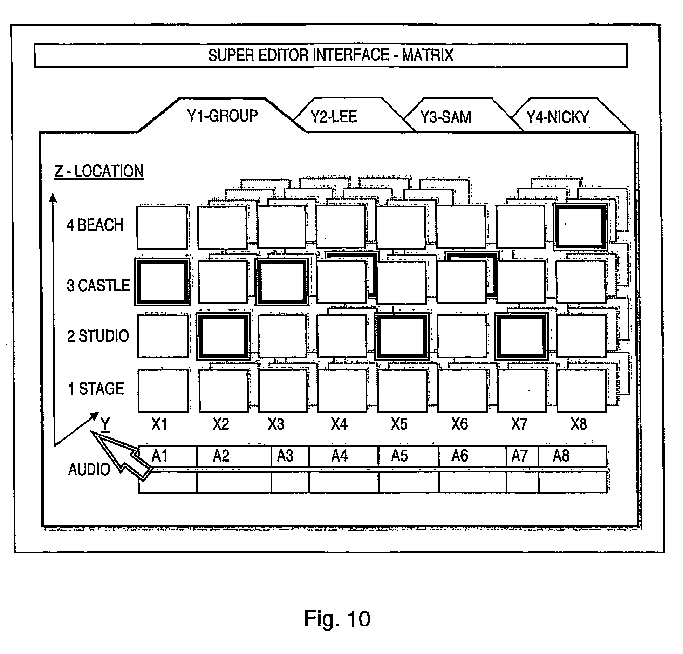

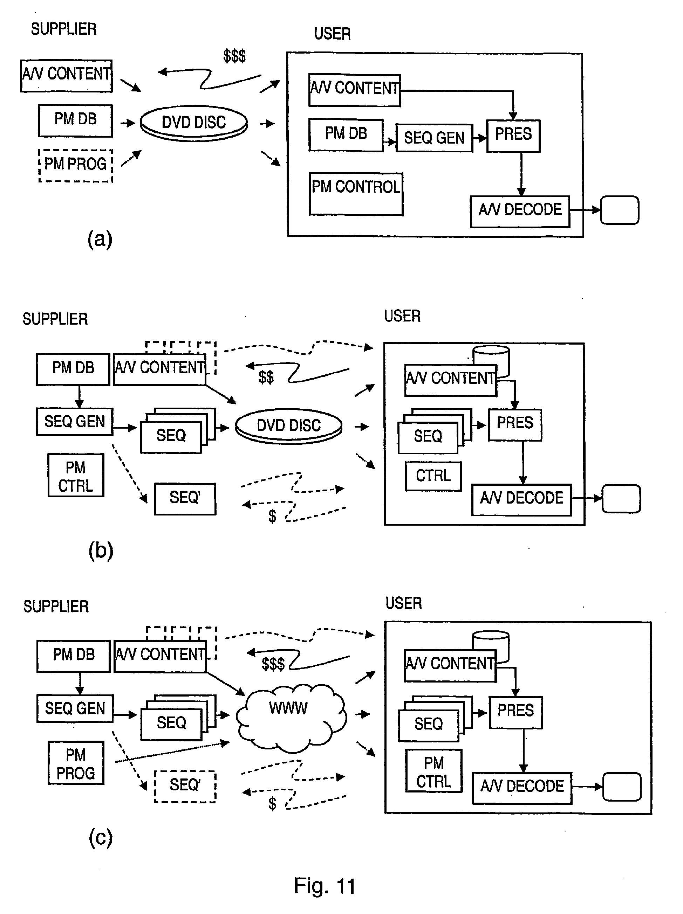

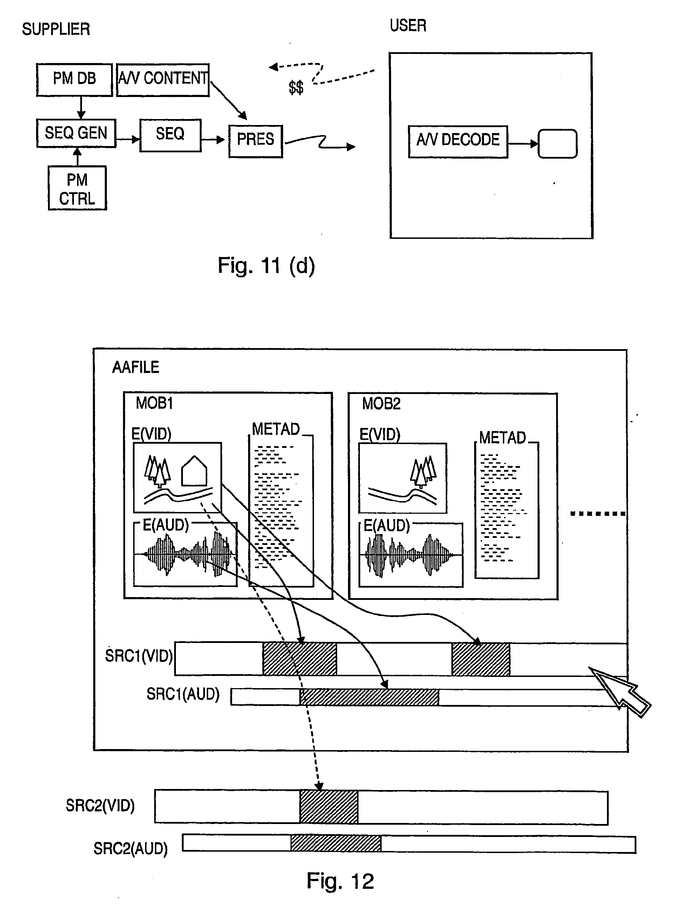

Although only two axes are represented in the drawing, there is no limit to the number of different dimensions provided in which to organise variations. Additional axes can be defined which are regarded as orthogonal to the X and Y axes, and as many as desired. It is free for the writer and director to develop their own scheme of variations, and to label the axes how they feel is right, according to their own style and the effect they wish to achieve in a particular project. One example of another axis might be a soundtrack or dialogue axis. For example a "voiceover" might be included in a scene or not. Because 100% random presentations are unlikely to be satisfying to either the author or the audience, these axes represent one way of structuring and visualising the constraints on the randomisation process that is at the heart of the PM presentation. In a computer-assisted scripting & production environment, a similar display may be presented to the writer/director/editor *et al*, but the invention is not limited to such implementations. An illustration of a possible user interface for editing polymorphic movies is given below, with reference to Figures 10 and 11.

With regard to the length of the presentation sequence, the rules for the sequence generation process may dictate that a presentation of N=8 segments is to be generated, a sequence of a certain duration, or N itself may be a randomised variable.

### Example Script

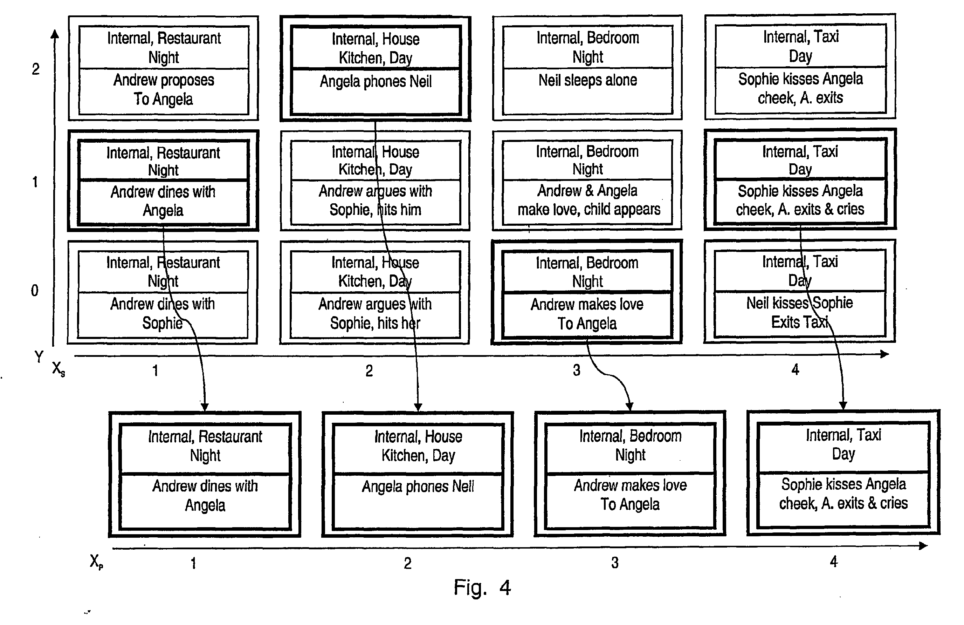

In order to put the above discussion into context, Fig 4 presents a very small example of a two-dimensional polymorphic script, involving characters Andrew, Angela, Neil and Sophie. In the example, there are four scenes along the X axis, and three Y axis variants at each X position. The writer has chosen to organise the scenes such that the setting of the scene (interior, exterior, location etc.) is the same for all the variants for a given XS, but the characters and/or action changes according to the Y index.

In the presentation sequence presented along the axis XP, random selection in the Y dimension has resulted in the inclusion of segments in the sequence: 1,1; 2,2; 3,0 and 4,1. The presentation order corresponds exactly to the order along the XS axis, either because a rule XP=XS has been established by the writer, or just as a result of chance.

Even with such a rigid rule, and with only 4 segments in the final sequence, 3 x 3 x 3 x 3 = 81 different presentations can result simply from randomising Y at each step. One can see that the architecture of a PM is really quite simple, but it already offers multiple, non-linear directions and outcomes. Provided each cell or segment packet retains its 'morphic' qualities and 'morphing' characteristics, and provided it retains its links to allow 'bonding', the author and playback system together can guarantee a seamless outcome and faultless play.

The axes offer great scope in terms of scenes and sequences by adding character and ability to morph; some additional attributes can be added to some or all scenes whereby the author can free and/or constrain the randomisation process at a higher, more structural level. This will assist the author in achieving presentations which, although having a randomisation process at work in their definition, still manage to convince the viewer with a sense of coherence. The options for creativity will be far greater in that case than if presentations are truly random, or constrained only by what scene can come immediately before or after another. For each of these the database includes an indication that the scene has a particular attribute, and one or more parameters specifying the detail or effect of that. The range of these special rules is still being developed, and imagination will provide more once experience of PM movie production is more widespread. For the time being the following examples will give a sense of the possibilities.

### Wildcards

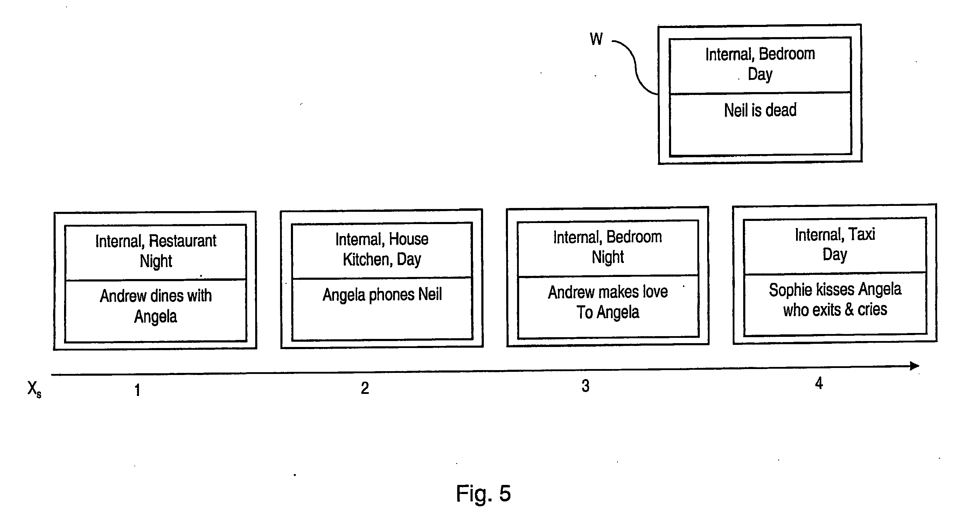

Figure 5 illustrates a further addition to the simple X,Y arrangement of segments, involving a 'Wildcard' which is a single segment outside the general X-Y structure. In the example, the wildcard segment W1 shows the character Neil dead.

For the sequence generator, segments identified as Wildcard segments are not fixed on any axis (particularly the time or X axis) but rather have "roaming" characteristics. The rules for other scenes may be such that the inclusion of a Wildcard scene has a far-reaching impact on the possibilities at other parts of the presentation. For example, if the overall story is about murder and mystery, a touch of comic action might turn the film into black comedy. On the other hand there might be situations where a Wildcard might completely destroy a sequence. If a Wildcard is indicated by the randomiser, the Sequence Generator will detect this and decide whether to retain the outcome or discard it by going through another randomisation or even drop some scenes and call from a library for others.

In the case where the Wildcard in which Neil is dead has been included in the presentation sequence, the reader can readily envisage rules should then apply to prevent scenes where Neil is obviously alive appearing at a later time.

Wildcards are best planned rather than left to chance. They have the same construction as a normal segment with the same IN/OUT rules for example. There is no reason why Wildcards should be casual or unruly, unless of course the story or the authors demand this for effect or we just want to experiment. As a very simple example, most films traditionally have a title sequence before the action. However, plenty of films are known where a 'pre-title' sequence is included, which can be short (as in *James Bond* films) or long, up to the complete length of the presentation (*Apocalypse Now*). In the PM format, the title sequence can be defined as a Wildcard or series of Wildcards, free to appear after other scenes. Rules can be defined so that the titles are kept in sequence relative to one another but can be separated by different other segments.

In other words, just like viruses in humans or computers can destroy a perfectly healthy body and vaccines can restore or increase immunity, here too a Wildcard has the power to destroy a 'romantic story' by bringing in elements of murder and mystery and turning the story in a drama or thriller and vice versa, depending on the power ('dominance') of the cell and its inclination ('character').

### Segment Bonding

Each Segment has to have the ability to recognise whether it can 'concatenate' or not. In this case the 'IN/OUT' procedures refer to a definition, script or library determining the extent to which the Segment itself can or cannot be used in any given sequence. The ability of a Segment to interlock itself into a sequence is called 'bonding' and, as the word implies, the definition for this characteristic might include 'strong' and 'weak' variables, which will make the 'attack' by a Wildcard more or less successful. In Figure 3 the strengths of bonds were indicated visually by different weights of arrows. This device could be used also in a screen display of a scripting system (or on cards if that is how one is organising one's thoughts. It will be appreciated that bonding is a concept which can be implemented through a variety of rule types, ranging from the most basic IN/OUT neighbour rules to longer-range relationships, fuzzy (strength) relationships, wildcards and so forth.

### Segment Dominance

An attribute of Dominance can be assigned to a Segment in the PM database, to determine its dominance over other Segments that may be candidates suggested by the randomiser. For example in a Drama, there may be very strong dramatic scenes which will seldom allow change into anything else in that particular sequence or even for a number of sequences before or after the dominant scene. This will enable a degree of control over the structure of any PM since a number of scenes designed this way will in themselves deter any Wildcard or Segments from interfering with the flow of the sequence or the Story.

### Segment Character

Segments can be assigned a Character, representing the inclination of its content in some pre-defined classification. If the story is comic in nature and then the character of the scene will reflect that and influence the positioning and usage of the Segment. Sometimes, during filming a conventional movie there may be 'cuts' not necessarily shown for one reason or another. Often this is because they have assumed a character which is inappropriate in the context of the normal movie. In a normal movie these unused pieces of polyester will end up at best as add-ons on a DVD. In a polymorphic movie, on the other hand, the character of the presentation may in fact vary, these scenes could hen be judged compatible and therefore be used (allowed to appear). In our case such Segments are digital blocks, which can be introduced in a story at any time as and when they are required, nothing is discarded. This will give greater flexibility to the production of PMs.

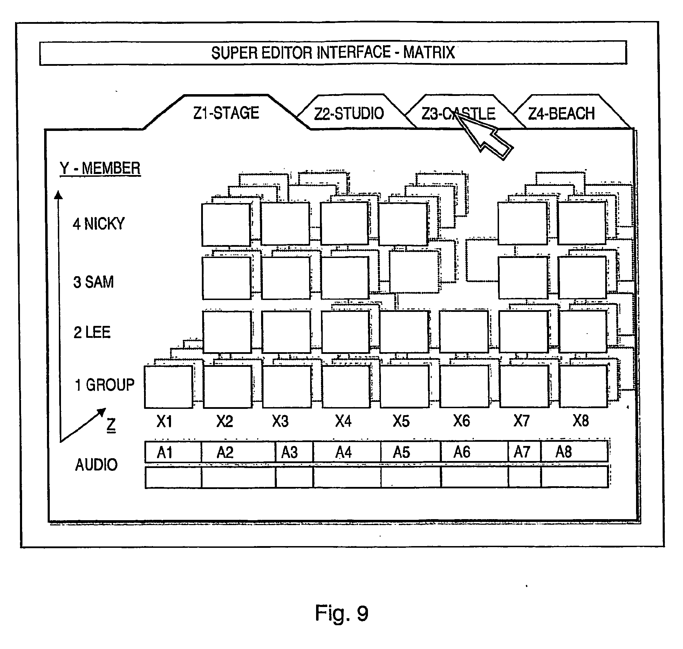

Other relationships that may be controlled between and within scenes will be illustrated below in the description of the AAF-compatible embodiment (Figures 9-13).

### Physical System Architecture

It is conceivable that some of the novel functions described herein may in fact be implemented with advanced programming techniques within the existing DVD command set. However, limitations in the complexity of that command set, the number of commands recognised and the size of programs permitted by the DVD-standard "virtual machine" are likely to make a truly seamless polymorphic presentation difficult to achieve without an enhanced playback apparatus. In any case, even if DVD players are theoretically capable of some of the effects described herein, current authoring tools do not, to our knowledge, facilitate the creation of DVDs having the appropriate databases and programming for truly polymorphic presentations. For example, it is typical for "studio release" and "director's cut" editions of the same material to be produced side by side on one or more discs, even though 90% of the content is identical. Whether this is due to limitations in the DVD platform itself, in the authoring tools or in the imagination of the producers, this duplication is clearly wasteful, and seriously limits the number of polymorphic variations that can be produced in a reasonable package. The inventors therefore propose that the content be stored in separate segments on the disc (or other storage medium) and concatenated into a particular presentation sequence only in the player apparatus. Provided minimum disc access times are respected, and/or sufficient buffering is provided, segments which are suitably crafted to lead into one another can be edited seamlessly into numerous different sequences, all without detracting from the cinematic experience.

Having said that special playback apparatus is likely to be required, it is envisaged that a conventional DVD storage and player architecture can be used as the platform for such an enhanced player. In particular, once the desired presentation sequence has been defined, it can be represented in the form of conventional DVD-standard "program chain" (PGC) entities. Each PGC has PRE and POST commands (procedures) which are executed by the "virtual machine" within standard DVD player. While in a normal DVD recording these would be pre-defined by the author and stored with the content files on the DVD medium itself, PGC entities in the same standard format can be generated with PRE and POST procedures appropriate to a new randomised sequence generated immediately prior to playback by the polymorphic movie sequence generator, and then fed to the normal DVD playback modules to deliver the presentation to the user. It is important in most cases that a "seamless" transition from one scene to another be achieved. The "cinematic" experience generally will be spoiled for viewers if the presentation pauses while files are loaded between randomised segments. Care must be taken in the authoring process to ensure that this is possible within the constraints of the DVD system. Alternatively, enhanced hardware with faster processing, increased buffer capacity and so on may be preferred to relax the authoring constraints and permit the maximum freedom in scripting and presentation.

Figure 6 shows schematically the architecture of the authoring process for polymorphic movies and the enhanced playback apparatus according to one embodiment of the invention. The component DVD VM (virtual machine) is provided by the microcontroller with RAM memory and firmware (ROM) that are commonly provided in a DVD player. Likewise the decoder for AN content is the same as in any DVD player. The additional components include the Sequence Generator responsible for generating a presentation sequence defined not by data taken from the DVD itself, but by a randomisation process which refers to rules stored alongside the audiovisual content on the DVD, and extracted into a database, also shown. A special menu is provided by module PM Control (via user interface USER I/O) for the user to interact with the sequence generator and control the polymorphic playback features. Based on the user input, the rules, and random numbers generated on demand by a randomiser RND within the sequence generator, the presentation sequence is defined, and data to cause the presentation of the stored AV content in accordance with that sequence is loaded into a buffer for supply to the DVD virtual machine. A broken line shows how similar data might be transferred directly to the same virtual machine for playback of conventional DVD content. Other functions, such as the conventional menu, are not illustrated for simplicity.

The additional components described may be provided by additional hardware physically connected between the disc reading hardware and the microcontroller. Equally the additional components and the "existing" DVD virtual machine can be implemented physically within the same microcontroller, ROM and RAM. Needless to say, the processing and storage capacity of those components may need to be increased in order to incorporate the added functions.

Figure 7 shows the operating sequence when a disc is inserted in the apparatus by a user. To the left of the flowchart appear the names of the components of the system primarily in involved. The user with a remote control handset turns the player on, and the disc is read. The PM Control module checks whether the disc carries a conventional or polymorphic (PM) recording. If the disc is not a PM recording control passes to the normal control functions of the DVD player, wherein the virtual machine (VM) controls the presentation of content from the disc in accordance with PGC data retrieved directly from the disc.

If the disc does carry a PM recording the PM Control module displays a PM menu or menus by which the user can select a "normal" viewing of the disc, or can select a randomised PM presentation. Parameters such as the "character" of the movie desired can be set through these menus, which naturally have to be defined as part of the scripting and authoring process, if they are to be available to the end user at this stage. Assuming a PM presentation is selected, the sequence generator gets to work in accordance with the user-selected parameters and the rules database retrieved from the disc, to load a brand new, randomised presentation sequence into the buffer memory of the DVD player. Control is then passed to the DVD virtual machine which controls playback of stored content from the disc just as if the presentation had been defined on the disc by a conventional authoring process.

As described for example in *The Unofficial DVD Specification,* mentioned in the introduction, the DVD virtual machine provides a number of programming instructions (the DVD VM Command Set) that are used to control the sequence of presentation of a movie from files stored on a DVD. These commands are used in particular to present menus and allow users to select different material to view besides the main feature on a disc. Limited interactivity can be provided, sufficient for simple games. Functions such as comparison of numeric variables and generation of randomised values are included in the standard DVD VM command set. Given sufficient processing power and memory, those or equivalent commands could be used in implementing the PM Control and Sequence Generator functions in the enhanced player. For polymorphic presentations, additional commands may be added to create a command set which is a superset of the DVD VM command set. Table 1 below gives some examples of additional commands that might be useful. These are only a few examples from what would be a larger command set in practice. The examples include high-level procedures and also low-level steps.

**TABLE 1**

| **Command** | **Description** |
|---|---|
| 1. Context | Check story context, that is to check whether scenes of a certain character should be favoured in the sequence generation. |
| 2. Bond w | Fuse two scenes together (weak) - part of sequence generation |
| 3. Find Child | Find relative scene 'down' - used in complex rules |
| 4. Find Parent | Find relative scene 'up' |
| 5. Find IN 'x' | Find IN characteristic 'x' - find all scenes that can follow scene 'x' |
| 6. Concatenate | A high-level procedure to generate a linked sequence ready for playback |
| 7. Permute | A high-level procedure to generate a presentation sequence by repeated randomisation and application of the rules from the database |
| 8. Backtrack | A lower level command allowing a sequence generation process to be partially undone, for example because unresolvable conflicts between rules. |
| 9. Save | A command to save a generated sequence for playback at a later date (for example on user command) |

It is proposed in the apparatus above that the Sequence Generator should operate so as to generate the entire presentation sequence prior to commencing playback. As an alternative, the presentation sequence could be generated as the presentation progresses, possibly influenced by user feedback (imagine a "Boring" button on the remote control which triggers some change in the parameters, or triggers the inclusion of a disruptive Wildcard scene). Defining the presentation sequence on the fly probably requires that the sequence is generated by an algorithm that starts with the first segment to be presented and proceeds forwards in time. In general, however, a variety of different algorithms can be envisaged, as mentioned in the introduction.

### Authoring Polymorphic Movies - Example: The Next Room

At the head of Figure 6 one can see the steps of content creation (filming scenes with sets, actors, lighting etc.) and scripting which feed then into the step of authoring the polymorphic recording itself, be it on DVD or some other medium. There are undoubtedly challenges ahead in developing powerful, flexible and intuitive authoring tools to facilitate the creative process and automate as much of the technical process as possible. A more detailed authoring system will be described below. For the present example, it is sufficient to know that its basic functionality is to produce a set of content segments and associated rules database which can be interpreted by the player described above.

Experience with a small, experimental polymorphic film entitled *The Next Room* gives some pointers to the type of considerations that arise in the creative process.

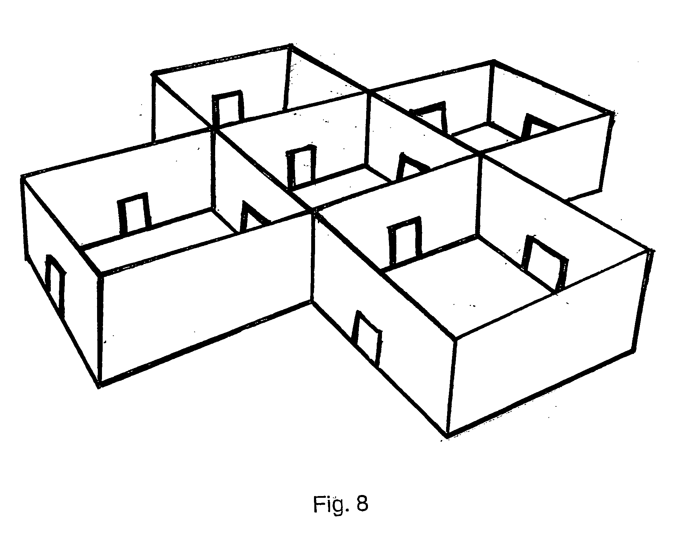

Figure 8 is a photograph of the set consisting of five identical rooms. By editing scenes together as actors pass between the rooms, the action is effectively set in an infinite landscape of identical rooms. In *The Next Room* a particularly regular geometry and structure for the set and the scenes is chosen so that the scenes can play seamlessly in any sequence. A man and a woman are the principle characters.

Stepping into a film studio and getting down to filming is never easy and requires a lot of planning, visualisation, control, checking, reviewing and so on. Creating a PM is just as demanding. Here the attention to detail becomes essential. Each scene has to be treated as a movie in its own right, from beginning to end. Whilst Actors are still afforded a degree of freedom in the 'middle' or 'body' of any scene the all important IN and OUT takes for any segment need extreme care and attention to structure.

Some extracts from the script will give a flavour of the considerations at work in this new creative environment:
*All rooms are square and of the same construct. Consisting of four equilateral walls, each with a centrally placed double swing door. Both the MAN and the WOMAN are breathless and anxious looking upon entering and leaving each scene. The woman perhaps a little more panicked. The actors are required to bring a look of ambiguity that could be taken as both hunter and hunted.*

Special consideration was given to the choice and position of the cameras and medium to be used: Three High Definition Cameras strategically placed in each room. Wide shots were always used for the OUT/Exit takes.

An extract from the script for four individual scenes (segments) then reads as follows:
*BLACK SCREEN FADE-IN (only and always on the following scene)*
*INT. NEXT ROOM 1*
   *CAMERA P.O.V. Bursts through the swing doors and heads straight to the doors opposite and bursts through them. No other doors are swinging and no o.s. noise is heard.*
*INT. NEXT ROOM 2. The doors swing open as the WOMAN bursts into the room. She stops and looks at each of the doors, anxious and confused, which one to take, she runs to the swing doors in front and bursts through them into the next room.*
*INT. NEXT ROOM 3. A MAN bursts through the swing doors and into the room. He stops and looks at the doors. Anxious and confused he sees the ones in front are swinging. He runs to and bursts through them.*
*INT*. *NEXT ROOM 4. The WOMAN bursts into the Room. She looks paniced and confused. She looks behind her, at the doors she's just come through, fearful of something. She takes the left door and bursts through it.*

Although these scenes are numbered, the scripting, pre-production and production process must take into account that they might be presented in any order. It has been found that cards (either real physical cards physically manipulated or virtual cards manipulated in a computer system) are a useful device. Each scene can be sketched on its card in the manner of a conventional storyboard. The cards can then be shuffled to try the effect of random permutations on the story, on continuity etc.. Rules for bonding etc. can be recorded on the cards or in a separate document.

In the particular case of *The Next Room* there are 19 principal scenes making up the story. The scenes were crafted specifically with 100% polymorphism in mind, meaning that the order of the scenes is completely random. The only rule applicable in that case was that each scene should appear once in the presentation sequence. We have calculated that 19 separate scissor-cut scenes can be shuffled into a new script give a total number of 121,645,100,408,832,000 different permutations, all for a film that is approximately 3 to 4 minutes duration. In fact it would take approximately 806 billion years of continuous viewing to see every different permutation. Accordingly, even if the degree of permutation permitted in a different project were limited to very few scenes, or constrained by far stricter rules, it does not take much freedom at all to realise a vast number of permutations, to create a movie that will never be the same in any two performances. The additional dimensions Y, Z etc add to the number of permutations possible. (As an aside, the player may store the generated sequences automatically or at user request, so that exactly the same presentation can be viewed again or share with others. This would be a matter for the author and player designer to permit if they want.)

Given the 'pure' nature of the story the scenes end up looking very similar to the untrained eye. This is purposely so because the author Das Abra wanted to eliminate any ambiguity or clutter which could result in us missing the point of the exercise. The rooms are empty; therefore the story is devoid of any reference to material that would defocus our attention from the form of each room, representing a scene or cell, and the mechanisms which link the rooms, the doors, or in our case the IN/OUT procedures. The actors play ambiguously to illustrate the ability to morph at any time the sense, feel and character of each random story.

### Music

While the dialogue and effects elements of the soundtrack of a scene will generally be stored as part of the content, it is difficult to permit randomisation and yet keep a musical accompaniment flowing satisfactorily. In order to address this, it is envisaged that musical score will be separated from the segments themselves, and played for example through a MIDI-based synthesiser in the player (similar to a computer sound card). The character of the music can be changed on the fly in response to the character of variants selected in the Y dimension, for example.

The examples of Figs 4, 5 and 8 illustrate the use of polymorphism to "play" with the structure of a presentation for novel dramatic or artistic effects. The reader will appreciate that the development of scripts for such material which will yield truly satisfying results is not a trivial business. Other applications such as promotional videos for pop music may also be considered, however, and show more immediate commercial potential. In a typical music video, the basic content is a performance of the song, synchronised with the sound track. The images are taken, however, from many different shots, with different locations, angles, focus on different members of the band and so forth. There may or may not also be one or more "mini dramas" performed which are not necessarily synchronised to the musical performance, and of course there may be any number of other images, limited only by the imagination of the artists and video author.

Such commercial audio-visual productions lend themselves very readily to the multi-dimensional polymorphism described above, and especially to the matrix representation. For example, with the x axis again representing the presentation time line, the x axis representing, for example, focus on different members of the group, and the z axis for example, representing different locations where images have been shot.

### Matrix View Editor

Figures 9 and 10 illustrate a possible graphical user interface for the "super editor" which manages data in the assembly of a polymorphic presentation based on X, Y and Z axes, explicitly representing the assembled material in that matrix form. Referring first to Figure 9, the main area of the display is occupied by icons, possibly including thumbnail images, but in any event representing individual image sequences (these may be individual shots or pre-assembled scenes). Along the foot of the display, audio tracks are represented, divided into segments each corresponding to one step along the x axis. Note that, whereas a dramatic presentation can in principle have scenes swapped in order, or scenes of different lengths, the video segments arranged in columns X1 to X8 have been cut to correspond exactly in length with respective audio segments A1 to A8, in order that synchronism can be maintained between the recorded musical performance and the performance of the artists in the video segments. Not shown on this display, but available elsewhere on the editor, are segments which can be more freely placed on the timeline, such as scenery and dramatic elements without musical performance.

The vertical axis as shown is the Y axis, corresponding to focus on different members of the group. Shown in broken outline are clips "behind" the clips arranged in the X and Y directions, indicating the Z dimension, available in more detail by clicking tabs Z2, Z3 etc, as will be illustrated shortly. The user has chosen to work in only one Z plane at present, and shadow display of these other "layers" can be turned off by a simple control (not shown), if preferred.

The first set of images in the Y direction corresponds in this example to shots showing the entire group in performance. Since we are viewing the Z1 tab, all of these segments are videos of the band performing in a stage setting. At other levels in the Y direction, different members of the band (Lee, Sam, Nicky) are the focus, for example in a close-up. Not all positions X, Y need to be occupied of course. For example, in the illustration the opening segment X1 of the song has only been shot at a group level, with no close-ups of individual band members. As in the dramatic examples of Figs 4, 5 and 8, rules can be defined for each segment, concerning its compatibility with other segments in the X, Y or Z direction. More likely, in the example of a pop promotional video, the main rules at work are those implicit in the assignment of a given segment to a position on the X, Y and Z axes. For example, a viewer who wants to concentrate on the performance of one particular member of the band can set a constant value Y = 3, so that the player will present close-ups of band member Sam more often than the other members. The author of the video can satisfy more viewers than conventionally, where only one member can be the centre of attention at a given point in the presentation, while the fan might be more interested in another.

Referring now to Figure 10, the view has been changed (for example by clicking on the short Z axis illustrated in Figure 9), effectively reorienting the matrix so that the Y axis is compressed into the layers "behind" the main view, vertical axis as displayed on screen then becomes the Z axis. The current Y axis layer is then selectable by tabs Y1, Y2 etc. across the top of the display. The Tab Y1 is selected, indicating in this example that all of the segments are shots of the group as a whole. It will be seen that the matrix is fully occupied, meaning that an entire performance of the group song has been recorded at each of the four locations, stage, studio, castle and beach, represented by values 1, 2, 3, 4 on the Z axis. Again, clicking on any of these segment icons allows editing of the properties of that and/or editing of the video content itself.

In both views Figure 9 and 10, the X (time) axis is the horizontal axis, but this is nto necessarily so. It may be very useful in the course of editing to display a Y-Z matrix, for example. The time axis would then be compressed into layers behind the display matrix, the matrix representing a particular time slice. In the illustrated example of the music video, this view would show what each band member (Y) is doing at each location (Z) at that point in the song. This gives the editor/director a good overview o the material available to be used in the presentation sequence at each point in the song. This view is useful whether a polymorphic or standard 'linear locked' presentation is being produced.

Presentation sequences can be defined by clicking on the icons in the sequence, for example those bounded in bold in Figure 10. Those sequences can be stored for use in the final presentation, or one of several possible presentations. New sequences can also be generated automatically by a command (not illustrated) which will run a simulation of the polymorphic player. These new sequences can be similarly highlighted for the director and editor to review. Sequences generated in this way may be saved by the editor as sequence definitions for later presentation, or as a basis for further work. They may be adjusted manually there and then before being saved, or they may be discarded.

Because the array of options is available to view in different ways, an easy overview is maintained on the rich set of material available, which might otherwise overwhelm the authors and lead to creative opportunities being missed.

Also by presenting the available content in a pre-defined matrix structure, a high degree of automation becomes possible. For example, by selecting a clip from among the recorded material and pasting it (such as by 'drag and drop' behaviour), that clip can become automatically labelled with its X, Y and Z properties - there is no need for the editor or assistant to type explanatory labels and keep written notes of where each clip belongs.

Further illustrations of possible editing facilities will be described below, including different views that may be obtained of the same data, together with functions which facilitate linking of each icon to the corresponding AN content.

### "Content Multiplication"

Figure 11 illustrates various alternative distribution models, (a), (b) and (c) for polymorphic multimedia content generated according to the principles described above. Model (a) in its basic form is the one described above, where the polymorphic production is released on a storage device such as a DVD disc, including on the disc: AN content for all the segments that may be played; a polymorphic rules database by which those segments can be assembled and played; and optionally a polymorphic control program, for turning a general-purpose apparatus such as a PC or programmable DVD into a polymorphic player implementation. In return (usually) for payment (indicated "$$$" in the diagram), the user at the right hand side of the diagram receives this complete package of data on a disc for use in their player. Within the player, the rules database is accessed under control of a polymorphic controller to generate randomised sequences in accordance with the rules and any parameters set by the user at each occasion of viewing. A presentation module PRES takes the sequence definition from the sequence generator and retrieves and concatenates the A/V content accordingly, for decoding and display to the user as one seamless presentation.

Model (b) is different in that the sequence generation occurs at the supplier side, the DVD or other storage device carrying only pre-defined sequence definitions SEQ. At the player side, the control is simplified, merely to select between the pre-defined sequence definitions (which may be only one or several), and the presentation module PRES retrieves the AN content to give the user the desired presentation. While the player does not provided full polymorphic capability, it is still useful in a number of scenarios. Firstly, several movies have been released in different versions, typically a "theatrical release" and a "director's cut". The example *Memento* mentioned in the introduction was later released on DVD accompanied by a chronologically ordered version, called *Memento Mori*.

Issuing these different versions to consumers on pre-recorded media such as DVD, or as downloads, conventionally requires duplication of the vast majority of the AN content, rather than only the added scenes. By supplying the AN content as a collection of separate scenes, stored in different files, together with just encoded sequence definitions for each version, the novel system allows a multi-version release, which might occupy or more discs in today's distribution methods, can be delivered on one disc only. It is noted that many DVD presentations come with "deleted scenes", "alternate endings" and the like, which the user can access via a menu to view at will. However, none of these presents the extra material as part of a continuous, seamless presentation. It is left to the viewer is left to imagine the context, seriously weakening the impact of the presentation. In contrast, using the polymorphic player with seamless concatenation in accordance with different sequence definitions, numerous versions of the same production can be viewed as entire, seamless presentations, without duplicating the core content.

Additionally, as indicated by the dashed communication lines in Figure 11(b), a facility may be provided to download further sequence definitions (SEQ'), perhaps in return for a small additional payment, allowing the user to access different versions without purchasing a whole new DVD. In a similar vein, it is also possible for some of the sequence definitions pre-stored on the disk to be "locked", to be unlocked by a digital key obtained in exchange for some appropriate payment. Payment and download mechanisms based on internet connections, or dial-up and satellite/cable downlinks are well known for pay-per-view purposes, and can be readily adapted to the new application proposed herein.

It is also possible for the producer/supplier to add additional AN content segments to be included in presentations by new sequence definitions. These can be supplied on a supplementary disc, without re-supplying the basic content. They may also be supplied by download through the Internet or whatever, as indicated by the broken lines at the top of the diagram. Local storage such as a hard disk drive is included in the user's player, for keeping this additional material ready to be concatenated among segments retrieved from the DVD disc. A server at the supplier's side may be arranged automatically to determine which additional segments are required to play a new sequence definition, or the controller at the user's side may compare the sequence definition with the segments available on the disk and in local store already, and request the supply of missing segments from the server at the supplier's side. In this way, artists and commercial publishers are able to multiply many times the content that they publish, without multiplying the number of discs. Suppliers and users can devise many different distribution and payment models, using the freedom provided by the polymorphic presentation system.

In addition to additional segments recorded at the time of creation of the original work, this mechanism allows authors to expand the content available as time goes by. Adding scenes or episodes to stories already recorded.

Figure 11(c) illustrates a similar distribution system, working entirely without 'hard copies of the material being bought and sold on disc. All AN content, sequence definitions, payments, etc are handled through the Internet or other network (labelled 'www' in the diagram). The steps described with reference to Figure 11 (b) are otherwise the same.

Figure 11 (d) illustrates another implementation, where the presentation sequence is determined and the content assembled seamlessly into a conventional video data stream, all at the server side. The user then requires only a standard video player, computer, mobile phone. The parameters generating the sequence may be selected by the provider (a conventional broadcaster or internet-based service). A broadcaster can vary the presentation, even when 'repeating' a movie shown before, for example, maintaining interest. The same sequence may be shown to all viewers, or different viewers may have different versions of the same program to talk about at work the next morning. In an interactive service, either via dial-up and satellite/cable or via internet, the user may set parameters which are used at the server side to guide the selection of content, just as if the user had the complete system of Figure 11 (a). The user in that case can use entirely standard and cheaper equipment, while the provide can keep control of the source material, protecting their future revenue.

Combinations of these models (a), (b), (c) and (d) are also possible. For example, the download model (c) may be modified so that the player does include the polymorphic database and sequence generator at the user's side, rather than accessing only pre-defined sequences. The entire content is therefore stored in the local storage of the user's apparatus. The downloads may include the polymorphic control programme, as mentioned in the basic model of Figure 11 (a). It is increasingly common for media content to be downloaded to portable video player devices, mobile phones and so on, while the cost and availability of a bandwidth with such high-volume material remains a limiting factor, to a large extent. By allowing the apparatus to download only new segments and new segments of content required for a new sequence definition, to supplement the majority of segments already held in local storage, a fast and economic supply of very different versions of the same general content can be achieved.

As in the model of Figure 11 (b), it may be determined at the server side or the user's side, which additional segments are required to supplement those available already in local memory. Where the sequence definition is one generated locally by random and/or user parameters, using a rules database and/or matrix properties of the segments, it may be easier for the user's apparatus to determine the additional segments required. Identifiers for the missing segments will be contained in the database and these identifiers can be sent to the supplier's server in order to retrieve the appropriate segments for download.

### AAF-Compliant Implementation

Advanced Authoring Format (AAF) is an industry-driven, open standard for multimedia authoring and post production, created by the AAF Association (see www.aafassociation.org). AAF is a file standard designed to allow the passage of full information. Not just the video, audio and text material - termed 'essence' in the language of AAF - but also the metadata with the decisions about how material has been manipulated (cuts, DVE, colour correction etc.) and assembled. The metadata also passes on existing, original information such as timecode or 'edgecode', ownership, previous editing. The primary application for AAF is to maintain this information across as many tasks of post-production as possible, and to archive it for re-editing material later. The assumption is still that this rich data format will be 'flattened' to a production format, fixing the presentation sequence as usual. For our purposes, however the AAF format provides an ideal platform for the production of rich polymorphic media. Since AAF is an open standard, and is ready-made to accept data extensions and 'plug-ins' extensible, it also provides an ideal platform for the development of authoring tools and playback tools.

Figure 12 illustrates the basic elements of an AAF file, which might define one or more scenes of a production, or a complete production. The file can contain any amount of video and audio source material, labelled SRC1(VID) and SRC1(AUD) respectively. The file also contains one or more 'Material Objects' or 'Mobs', of which MOB1 and MOB2 are examples. Each Mob contains a reference to parts of the source materials defining a segment of a/v presentation (video and audio 'essence'). As shown by the dotted link, the Mob may also include a reference to source materials SRC2(VID) and SRC2(AUD) which are not stored within the file itself. The Mob also contains the metadata recording what processing has been applied, edit history and so forth. The AAF file structure is such that parts of it, particularly the metadata, can be edited and re-written without re-writing the whole file. The metadata will typically include EDL data, of the type shown in Figure 2, all in a standard format. The metadata can also be extended however to contain data such as the rules applicable to the segment in a polymorphic movie system. Provided a playback apparatus can read these rules and apply the appropriate processing as described already above, the AAF file can be used as the medium for delivery of the content and the rules database for polymorphic movies.

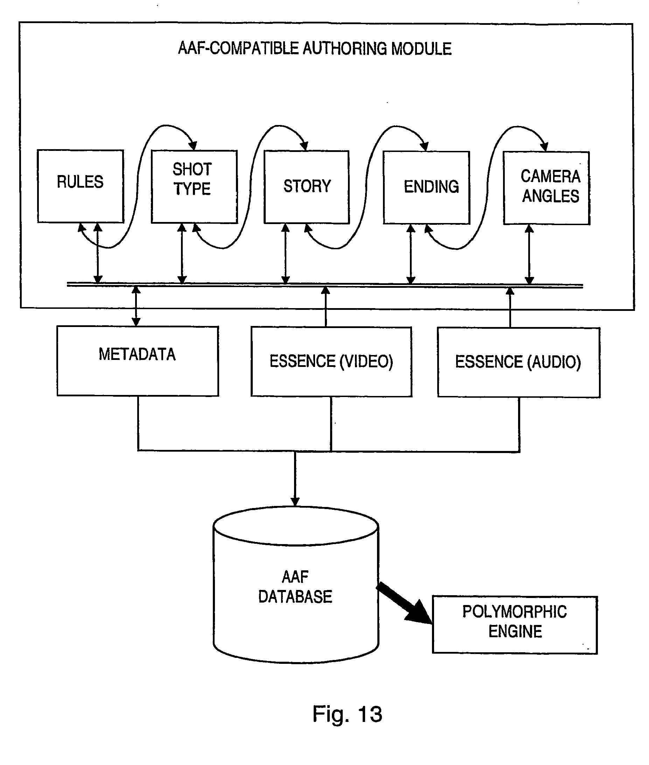

Figure 13 shows in its top part the functional structure of an AAF-compatible authoring module for polymorphic movies, in accordance with a preferred embodiment of the invention. The module accesses the AAF database, including source (essence) materials and metadata, and allows polymorphic authoring operations based on several different views of the material and its properties. In a first view, the user can view and edit the rules explicitly which govern assembly of the presentation sequence. In other views, more global changes can be defined, in the category of shot type (examples might be 'extreme close-up', 'close-up', 'wide shot', 'dolly shot'), story structure. A special view is provided to the design and selection of endings, and another for referencing footage of the same event from different camera angles. Depending on the degree of polymorphism and design freedom allowed in a given implementation, these views may allow changes within rigid parameters only, or may allow changes affecting the whole presentation, including what is seen in other views. For example, changes made in the 'Shot Type' view may translate implicitly into rules that are generated automatically, but can be seen and edited directly in the 'Rules' view. The views shown are not the only ones possible, but merely a selection of ones which the author might want intuitively to use.

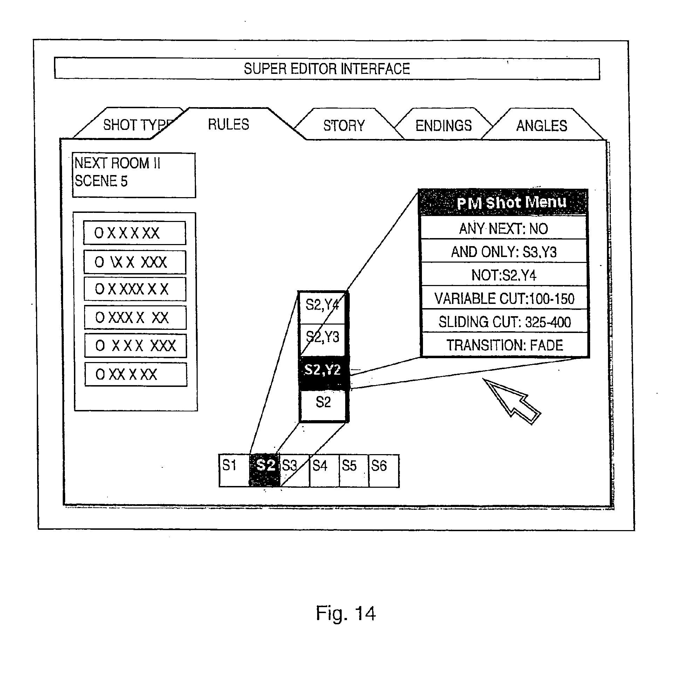

Figure 14 shows just one of these views, the Rules view, in a suitable user interface display. At the foot of the control pane, a presentation sequence of shots is represented S1, S2 up to S6. These shots are being assembled into one scene using a two-dimensional matrix. Referring also to Figure 3 now, it can be appreciated that polymorphism is possible by the selection of shots within each scene, as well as at the level of scene selection within the movie as a whole. It will also be seen shortly how polymorphism can readily be introduced at the frame level, that is within shots themselves. The polymorphic authoring system can include general editing facilities to define these shots and scenes out of the source material. Alternatively, and particularly since the AAF format is recognised by some of the popular digital editing tools already on the market, these shots will typically be imported as AAF Mobs already formed in some other application. In either case, the source materials can be brought in from their source files conveniently using a 'drag and drop' interface, using a pointing device and thumbnail images on the display screen. The job using the present authoring system then becomes one of linking the shots and scenes together with the desired polymorphic constraints and possibilities.

If the polymorphic rules and matrix structure have already been defined, at least partially, during a scripting phase, the matrix may already exist. That is likely to be the case when a project is conceived from the outset as a polymorphic production. In that case, the filming and recording of content will be done to generate shots which already have their place in the matrix and can be imported into the editing application relatively automatically. On the other hand, when producing a polymorphic movie from pre-existing material, the task of collecting the material and defining the rules to go with it in the editing application are more likely to be done simultaneously.

In the state of the display as shown, the user has selected shot S2 for detailed attention, causing the editor interface to display γ-axis alternatives for the shot. From simple S2 to (S2, Y4). The user has then opted to display and define the specific rules stored for shot (S2,Y2). A predefined menu of parameters is displayed, including:
- ANY NEXT?: A 'yes' here would indicate no restriction on the shots that can follow immediately after this one. The user selected 'no'.
- AND ONLY: The user can specify the that a certain shot must follow the present one.
- NOT: The user can specify certain shots with which the present shot cannot must not appear in the same presentation.
- VARIABLE CUT: The user can specify a range of frames within which a 'variable cut' can be made (see explanation below).
- SLIDING CUT: The user can specify a range of frames within which a 'sliding cut' can be made (see explanation below).
- TRANSITION: The user can specify a form of transition to the next shot. Examples are 'cut to', 'fade to black', 'dissolve'. This recognises that the type of transition is part of the character of the presentation, and might be different for different versions of the same shot.

As in the example of Figure 3, these are only a few typical examples of the kinds of rules that may be applied. Rules may be forward- and/or backward-looking.

### Sliding Cut

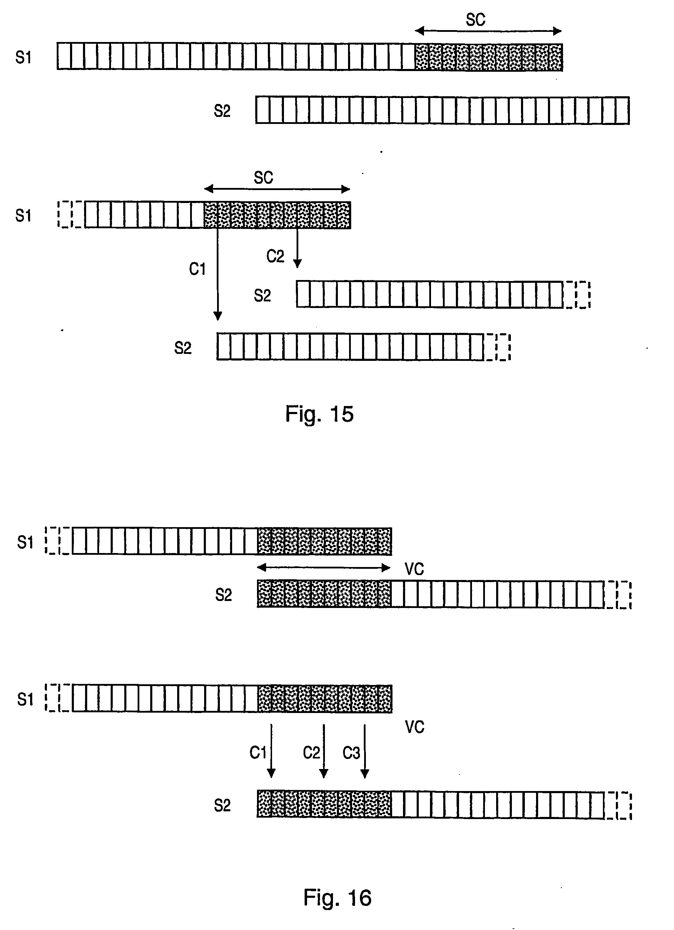

Figure 15 illustrates the operation of a 'sliding cut', which is a simple technique to provide frame-level polymorphism, which can be controlled to give subtle or dramatic changes to the viewing experience. The example illustrates the transition from shot S1 to shot S2. A range of frames SC at the end of shot S1 is designated as a sliding cut range. The transition to shot S2 can be made at any point in this range, depending on a random value and/or a user-set parameter. In one presentation, the shot S1 might end very early, as shown at C1. On another viewing, the shot might linger to point C2.

Note that the sliding cut alters the overall length of the presentation. A global variable, either random or user defined, could be assigned to bring forward all the sliding cuts so as to present a hurried presentation, or to delay the sliding cuts to the maximum for a more lingering effect. The author can define the sliding cut range so as not to change any significant action or expression, leaving the plot intact, but the rhythm changed, The author could equally define the sliding cut range so that sometimes a significant event or facial expression will be seen on some viewing occasions and not seen on others.

A sliding cut can in principle be defined to vary the entry point to a segment, as well as the exit point illustrated in Figure 15. adding another option to the menu. The available transition points may be defined as a free selection within a range of frame numbers, as shown in the illustrations, or may be defined as a set of specific frame positions or sub-ranges (for example "SLIDING CUT: 100-124, 142, 150-172"). The principle of the sliding cut can be applied to vary the point of transition between whole scenes, as well to vary the point of transition between shots within one scene. Although referred to as a sliding 'cut', this is merely shorthand: the type of transition might be a dissolve, fade etc..

### Variable Cut

Figure 16 illustrates a feature similar to the sliding cut, which alters the timing of transition from shot S1 to S2, without altering the overall length of the scene. The transition may occur in the video only, with dialogue on the audio channel continuing underneath. Again, the author defines a range of frames VC within which the cut can be determined by random values or user parameters. The cut may occur early, as shown at C1, at an intermediate point C2 or be delayed as at C3.

As with the sliding cut, the available transition points may be defined as a free selection within a range of frame numbers, as shown in the illustrations, or may be defined as a set of specific frame positions. Again, the exact form of transition may be a cut, dissolve etc..

These frame level variations allow quite subtle changes in the viewing experience. For more radical changes, one could also include the facility to program 'sliding' or variable changes at a scene or shot level. To visualise this, imagine that each small unit shown in the timelines in Figures 15 and 16 might be a scene or a shot, rather than a frame. This might be too radical, if significant action is present in these scenes. On the other hand, movies often include several 'establishing shots' to let the viewer know where the action is taking place, and subtle variations in the viewing experience might be obtained by adding or losing one or more of these.

### Content Capture

In conventional production, much work is done to prepare a shot list and to keep track of which shots, required in the final presentation, have been filmed and which haven't, how many takes of each one have been filmed, and which take is to be used. A lot of manual work is required before editing can begin, bringing shots from different sources, identifying them and their place in the production, on a conventional display or on a novel "matrix" display as illustrated in Figures 9, 10 and 14.

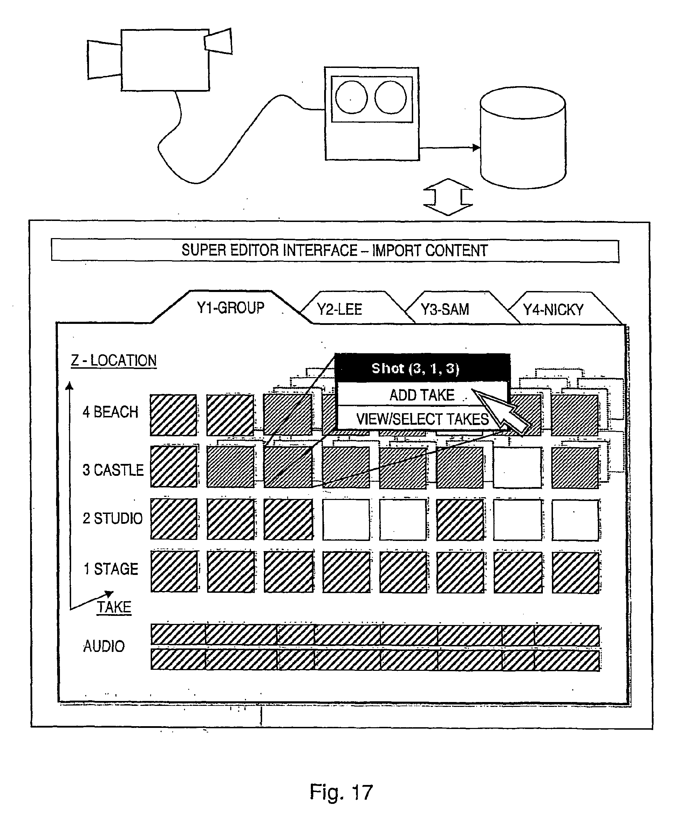

Figure 17 illustrates exploitation of the "matrix" representation, described already in the editing system, extended into the pre-production phase, and used to automate the capture of a material in a most efficient manner. The display is similar to that seen in Figure 10. The display is created prior to filming, however. Therefore at this stage, rather than thumbnails, the icons in the matrix are merely place holders for content when available. Each item in the display may represent an AAF file or a MOB within an AAF file. Before the material has been filmed, the MOB may contain only meta-data, detailing its subject, perhaps linking to a "storyboard" image, script file, continuity notes or the like, but importantly holding a place in the graphic representation of the production displayed on the screen shown in Figure 17.

The inventors propose that this interface, in addition to being a place of work for the editor in post-production, should become the template into which content is imported, preferably during filming itself, but at least during linking and/or transfer of material from tape to editing suite. Accordingly, the system is provided with a data connection to the camera/tape recorder which captures the digital video segments. The film crew use this display interactively to select the item which is going to be filmed, as illustrated by the pop-up menu and cursor shown in Figure 17. When "add take" is selected, meta data is created already to receive the material about to be filmed. (As explained above, the essence itself may be kept in a separate file, with the AAF file itself only receiving a link to the location of that take. Alternatively, the data may be imported completely into the AAF file, according to the wishes of the designer.)

It is not uncommon for six takes of the same shot to be taken routinely in a production, giving a so-called "shooting ratio" of 6:1. Once these shots have been taken, the user can click the second option on the menu "view/select take", reviewing and selecting which of the takes is to be used for that shot at the end of the presentation. The take selection can be done during filming, or of course deferred until later. Even in the former case, exploiting the rich metadata capabilities of the AAF file format, the alternate takes can remain linked, to be revisited later if desired.

Three distinct shadings are shown on the icons in the display of Fig 17, indicating that colour coding, or other highlight devices can assist the crew in keeping track of which segments have been filmed and which have not. In a simple scheme illustrated in Figure 17, dark hatching is used to indicate shots which have been imported, and the take selected. The audio tracks, in the case of a pop promotional video, are the starting points, so they are naturally filled with dark hatching also. Lighter hatching indicates scenes where one or more takes have been imported, but it remains to select which take is to be used in the post-production phase. Blank squares indicate segments defined during the scripting/storyboard phase, for which there may be metadata, but no A/V content has been imported yet. Provided that the system is being used at the time of filming, rather than merely to import filmed material from tapes, this visual cue may save expensive mistakes, where it is discovered that one or more scenes have been missed.

Further forms of colour/highlight may indicate, for example, scenes for which raw content has been attached, but editing of that segment has still to be done. This distinction may alternatively be saved for a different view, to simplify the "import content" display.

Whether or not the matrix display is used actually at the time of filming, it can still be used to import film content directly into the pre-established matrix structure, or other rules structure. The principles of organising the importation of content into pre-established locations within a AAF data structure and display can be applied more widely than the specific polymorphic production environment described above. That is to say, even for a "conventional" multimedia presentation, there is still the opportunity to organise the data structure at the scripting/storyboard stage, into which filmed segments can be linked automatically at the time of filming, rather than having to be picked manually from a jumble of material at a later stage. As with Figure 10, alternate views of the production can be obtained by clicking on different tabs, Y1, Y2 etc, and by changing from Z to Y axis representation. At the import stage, an additional dimension is the 'take' number which may be may not be flattened before entering the next stage, but can be opened again so long as the links to the alternate takes are maintained in the metadata.

### Further Comments

While the embodiments above are presented in the form of a database of rules and a Sequence Generator processing random numbers with reference to those rules, the invention also encompasses the possibility of introducing automation in our segments to the extent that they are constructed to behave as automatons in their own right. The sequence generation task then becomes distributed to the individual segments, each segment being processed according to its rules to bond itself with other segments and so define the presentation sequence. Segments may even be enabled to regenerate and evolve or even modify themselves. Just like computer viruses do have certain proliferating abilities, there is no reason to believe that segments could not perform self-perpetuating tasks, within the confines of the materials and rules assigned to them. Imagine a Segment as a complete scene initially with cut-in and cut-out procedures built in, but eventually able to evolve in quasi-Al (artificial intelligence) entities able to draw from libraries carried on the DVD, on a remote server or in the players themselves, which seamlessly play an array of instructions and functions like transition effects, dissolves, cuts, variable/sliding transitions, randomisation and so on. Because these instructions are digital, we are in a position to randomise and eventually even allow each cell or segment to recognise if it fits in a particular sequence or if by reference it needs support or exclusion of itself or other cells in said sequence, in order to maintain the integrity of the story, whatever it turns out to be. Therefore the prerequisites of a PM are segments that are digital in format, can be randomised and can carry seamless in/out transitions

The invention in other aspects does not necessarily include the generation of new sequences at the time of playback, at the user's side, or at the server side. Although these areas are the main application of the editing and content capture systems described, it will be see that those sophisticated tools will be useful in the production of conventional, linear multimedia forms, as well as polymorphic. If possible, a disc carrying the polymorphic movie should carry a 'locked' version as well, for compatibility with non-PM players. The editor can just as well produce a separate version for that market, however, in standard DVD or HD-DVD/BluRay™ format.

The skilled reader will appreciate that the examples presented herein are only a small selection, representative of a very wide range of possibilities for the construction of authoring systems and players for polymorphic media. The invention encompasses the above examples, together with many other variations and modifications that may be envisaged by the person skilled in the art from reading of this document, or developed in the course of experimentation with real media content.

Various embodiments of the invention are defined below in the following numbered paragraphs:
NP1. An apparatus for polymorphic presentation of pre-recorded audiovisual content, particularly motion picture content, the recorded content comprising a plurality of individual segments, the apparatus comprising sequencing means for defining a presentation sequence of a subset of the segments and for causing the segments to be presented in accordance with the defined presentation sequence, wherein:
   said sequencing means uses randomisation to define at least part of the presentation sequence,
   each segment involved in the randomised part of the sequence has associated with it at least one rule of compatibility with other segments, and
   the sequencing means is operable to generate said randomised part of the sequence by selecting and adding segments to a sequence already partly defined, using (i) randomised values and (ii) predetermined rules specifying compatibility between the segments already included in the sequence and segments which are candidates for adding to the sequence.
NP2. An apparatus as recited in numbered paragraph NP1 wherein the sequencing means is operable to select only a subset of the recorded segments to include in the presentation sequence.
NP3. An apparatus as recited in numbered paragraph NP1 or NP2 wherein the sequencing means is operable to vary the relative order of segments in the presentation sequence in accordance with randomised value.
NP4. An apparatus as recited in numbered paragraph NP1, NP2 or NP3 wherein the sequencing means is responsive to an OUT rule for a segment, the OUT rule restricting which other segments can immediately follow the segment.
NP5. An apparatus as recited in numbered paragraph NP1, NP2, NP3 or NP4 wherein the sequencing means is responsive to an IN rule for a segment, the IN rule restricting which other segments the segment can immediately precede.
NP6. An apparatus as recited in any preceding numbered paragraph wherein the sequencing means is responsive to rules defining a group of segments nominally occupying the same position on a first axis, the sequencing means selecting the group according to a first randomised value, and then selecting a particular member of the group according to a second value.
NP7. An apparatus as recited in numbered paragraph NP6 operable such that the second value can be a randomised value or a user-determined parameter.
NP8. An apparatus as recited in any preceding numbered paragraph wherein the sequencing means is responsive to a rule for a segment restricting which other segments can appear at any point after the segment.
NP9. An apparatus as recited in any preceding numbered paragraph wherein the sequencing means is responsive to a rule for a segment restricting which other segments can appear in the same presentation sequence.
NP10. An apparatus as recited in any preceding numbered paragraph wherein the sequencing means is operable to build presentation sequences in an order selected based on information stored with the pre-recorded content.
NP11. An apparatus as recited in any preceding numbered paragraph wherein the sequencing means is operable to apply fuzzy rules, the outcome of such rules depending on a comparison between the relative strengths of contradictory rules, or on a comparison of a rule strength and a randomised values.
NP12. An apparatus as recited in any preceding numbered paragraph wherein the sequencing means is responsive to further attributes stored in relation to certain segments.
NP13. An apparatus as recited in numbered paragraph NP12 wherein a segment may have an attribute of dominance, the dominance permitting a rule to be broken according to a strength of the rule.
NP14. An apparatus as recited in any preceding numbered paragraph wherein the sequencing means is operable to re-use a previously-generated randomised value in subsequent decisions between candidate segments.
NP15. An apparatus as recited in any preceding numbered paragraph wherein the sequencing means is operable such that one or more of the included segments is itself defined by a presentation of sub-segments assembled at the time of playback.
NP16. An apparatus as recited in any preceding numbered paragraph wherein the sequencing means may be responsive to a rule associated with one of a segment and a sub-segment permitting transition to or from the segment at a number of alternative points, selecting the point of transition in the presentation sequence in accordance with a randomised value.
NP17. An apparatus as recited in numbered paragraph NP16 wherein the sequencing means is responsive to a rule defining a 'sliding cut' between two segments, such that a segment is terminated early or late depending on a randomised value, the sliding cut thus having an effect on the total length of the presentation sequence.
NP18. An apparatus as recited in numbered paragraph NP16 or NP17 wherein the sequencing means is responsive to a rule defining a 'variable cut' between two segments, in which the point of transition is varied in accordance with the randomised value, without altering the overall duration.
NP19. An apparatus as recited in any preceding numbered paragraph wherein the sequencing means is operable to retrieve said rules from special metadata fields within an Advanced Authoring Format (AAF) file which also defines the corresponding audiovisual content.
NP20. A recording medium wherein audiovisual content and a rules database are stored for use in an apparatus according to any of numbered paragraphs NP1-NP19 above.
NP21. A recording medium as recited in numbered paragraph NP20 wherein the content and rules are stored in one or more AAF files, the rules database being stored as metadata within the AAF format.
NP22. A method for the production of polymorphic audiovisual presentations, comprising assembling on a storage medium (i) a number of pre-recorded segments of audiovisual source material and (ii) a database of rules for use by the sequencing means of an apparatus as recited in any of numbered paragraphs NP1-NP19 above.
NP23. An apparatus for polymorphic presentation of pre-recorded audiovisual content, the recorded content comprising a plurality of individual segments stored on a recording medium, the apparatus comprising sequencing means for defining a presentation sequence of at least a subset of the segments and for causing the segments to be presented in accordance with the defined presentation sequence, whereby segments of recorded content can be used and re-used in numerous different presentation sequences substantially without replicating the content on the recording medium.
NP24. An apparatus as recited in numbered paragraph NP23 operable to retrieve sequences which have been pre-defined and stored on the storage medium.
NP25. An apparatus as recited in numbered paragraph NP24 wherein at least a subset of the pre-defined and stored sequences are encrypted and accessible upon receipt of key information.
NP26. An apparatus as recited in numbered paragraph NP23, NP24 or NP25, further operable to receive sequence definitions over a telecommunication channel and use the received sequence definitions to present a new sequence of segments including at least some of the segments stored locally on said recording medium.
NP27. A server apparatus operable to transmit sequence definitions over a telecommunications channel or use in an apparatus as recited in numbered paragraph NP26.
NP28. An apparatus for polymorphic presentation or pre-recorded audiovisual content, the apparatus including means for receiving over a telecommunication channel a plurality of individual segments of said recorded content and storing them locally in the apparatus, the apparatus comprising sequencing means for defining a presentation sequence of at least a subset of the segments and for causing the segments to be presented in accordance with the defined presentation sequence, whereby segments of content stored locally can be used and re-used in numerous different presentation sequences substantially without re-downloading them via said channel.
NP29. An apparatus as recited in numbered paragraph NP28 operable to download a prepared definition of a new presentation sequence, containing references identifying the locally stored segments used in the new presentation sequence.
NP30. An apparatus as recited in numbered paragraph NP28 or NP29 wherein the apparatus includes means for downloading a database of rules associated with the downloaded content segments, the sequencing means being operable to generate new sequence definitions at least partially by a randomisation process applied by the apparatus reference to said rules.
NP31. An apparatus as recited in numbered paragraph NP30 operable to download new rules for presentation of the same content segments, without re-downloading the content segments themselves.
NP32. An apparatus as recited in any of numbered paragraphs NP23 to NP31 operable to download additional segments of content from a remote server, in the event that a new sequence definition requiring content not already stored locally in the apparatus, without downloading all the referenced segments.
NP33. A computer-assisted authoring tool specifically adapted for use in the production of a recording medium as recited in numbered paragraph NP20 or NP21.

## Claims

1. An editing apparatus for multimedia content including video data segments, the apparatus have having a user interface providing a matrix structure of at least two dimensions, in which one or more segments can be assigned to a given location in the matrix.

2. An apparatus as claimed in claim 1 wherein segments may be assigned to a location in the matrix by a 'drag-and-drop' action using a pointing device and a display item representative of the content in a source location.

3. An apparatus as claimed in claim 1 or 2 operable such that a segment at a matrix location may itself be a composite of plural sub-segments, the apparatus being operable to open and make editing changes within the segment at a given matrix location.

4. An apparatus as claimed in claim 3 operable to display a sub-structure also comprising a multi-dimensional matrix of said sub-segments within a segment of the first-mentioned matrix.

5. An apparatus as claimed in claim 1, 2, 3 or 4 wherein the matrix structure has more than two dimensions, the user interface presenting selected two-dimensional views according to a pair of dimensions selected by the operator out of said more than two dimensions.

6. An apparatus as claimed in claim 5 wherein the user interface provides controls for selecting a value in a third dimension to be represented in said two-dimensional view.

7. An apparatus as claimed in any of claims 1 to 6 operable such that one of said dimensions represents a presentation time sequence.

8. An apparatus as claimed in any of claims 1 to 7 operable to display representations of selected segments in a presentation sequence separate from the matrix, and to permit segments from the array to be selected and placed at a desired location in the presentation sequence.

9. An apparatus as claimed in any of claims 1 to 8 further including means for automatically generating presentation sequence definitions using a succession of co-ordinate sets to reference, in a presentation order, selected segments by their locations in the matrix.

10. An apparatus as claimed in claim 9 wherein the sequence generating means is operable to restrict the permutations of segments included in a sequence definition, by reference to compatibility rules associated with one or more matrix locations.

11. An apparatus as claimed in claim 9 or 10 wherein the sequence generating means is operable to influence the selection of segments to be included in the sequence definition, by reference to preference values indicated by the operator.

12. An apparatus as claimed in claim 11 wherein the sequence generator is responsive to preference expressed in terms of one of said matrix dimensions.

13. An apparatus as claimed in claim 10, 11 or 12 wherein the sequence generator includes a randomiser for use in determining a selection, taking account of any such restrictions and/or preference values expressed.

14. An apparatus as claimed in any of claims 9 to 13, including means for reproducing the selected segments in the presentation order as a continuous presentation, for immediate viewing or in a recorded format.

15. An apparatus as claimed in any of claims 9 to 14 including means for storing a plurality of alternative sequence definitions on a storage medium, together with content necessary to reproduce at a later time any segment referenced in said sequence definitions.

16. An apparatus as claimed in any of claims 1 to 15 wherein the matrix structure is defined by metadata in one or more AAF format files.

17. An apparatus for organising multimedia content during creation, particularly video data segments, the apparatus have having a user interface providing a matrix structure of at least two dimensions and having a communication interface to video recording apparatus, whereby a segment can be assigned to a given location in the matrix immediately at the time of recording.

18. An apparatus as claimed in claim 17 operable such that an operator can select a matrix location using a pointing device prior to initiating capture of a segment of video recording.

19. An apparatus as claimed in claim 17 or 18, operable to permit a plurality of takes to be associated with a given matrix location.

20. An apparatus as claimed in claim 19 operable to present said takes for selection of a preferred take at each matrix location.

21. An apparatus as claimed in claim 17, 18, 19 or 20 operable to present the user interface so as to highlight automatically matrix locations for which content is still to be captured.

22. An apparatus as claimed in any of claims 17 to 21 operable to define a matrix structure having more than two dimensions, the user interface being operable to present selected two-dimensional views according to a pair of dimensions selected by the user.

23. An apparatus as claimed in claim 22 wherein said user interface provides controls for selecting the points in a third dimension be represented in said two-dimensional view.

24. An apparatus as claimed in any of claims 17 to 23 operable such that a segment at a matrix location may itself be a composite of plural sub-segments, the apparatus being operable to open and make editing changes within the segment at a given matrix location.

25. An apparatus as claimed in claim 24 operable to display representations of said sub-segments in a sub-structure also comprising a multi-dimensional matrix within a single matrix location of the first-mentioned matrix.

26. An apparatus as claimed in claim 25 operable to open and make editing changes within the segment at a given matrix location, then close and hide the sub-structure of the segment.

27. An apparatus as claimed in any of claims 17 to 26 operable to store compatibility rules between segments associated with specific matrix locations prior to capture of the content forming those segments, said rules being suitable to indicate permutations permitted or preferred in subsequent polymorphic presentation of the segments.

28. An apparatus as claimed in claim 27 wherein the apparatus may provide for editing of said rules before and after capture.
